# EUROPEAN PATENT SPECIFICATION

(11) **EP 1 472 084 B1**
(45) Date of publication and mention of the grant of the patent: **06.04.2011**
(21) Application number: 03737673.8
(22) Date of filing: 05.02.2003
(51) Int. Cl.: B32B 27/04, D06N 3/12, A21B 3/13, A21B 3/15

(54) **COMPOSITE ARTICLES FOR USE IN COOKING**
VERBUNDARTIKEL ZUR VERWENDUNG BEIM KOCHEN
ARTICLES COMPOSITE POUR LA CUISSON

(30) Priority: 07.02.2002 US 355395 P
(43) Date of publication of application: 03.11.2004
(73) Proprietor: Saint-Gobain Performance Plastics Corporation, Wayne, NJ 07470 (US)
(72) Inventor: KEESE, Frank, M., Cambridge, NY 12816 (US); Sharps, Gordon V., Merrimack, NH 03054 (US)
(74) Representative: Leidescher, Thomas
(86) International application number: PCT/US2003/003575
(87) International publication number: WO 2003/066328

(56) References cited:
- EP-A- 0 543 401
- FR-A- 2 505 142
- FR-A- 2 774 554

## Description

### FIELD OF THE INVENTION

The present invention is directed to composite articles comprising a fabric of thermoplastic organic polymer impregnated with a cured, heat resistant polymer and the use of the composite articles in cooking and baking, and more particularly to their use as dough forms which can be used to hold dough during both fermentation and baking stages.

### BACKGROUND OF THE INVENTION

The traditional way of making bread or similar baked products includes two essential stages, fermentation and baking. These stages by their nature involve intermediate handling and storage operations. In the traditional methods, shaped lumps of dough are first deposited for fermentation on linen cloths, called "napkins". They are then individually placed directly on the floor of an oven, using either an oven peel or an oven loading conveyer. Such handling operations are delicate, and require skilled labor, since the uncooked dough is sticky and soft and therefore easily damaged.

The problems in handling dough have been greatly reduced by the introduction of dough forms, which are permeable to air, have a non-stick surface, and can survive a baking process while continuing to carry the dough article. After lumps of dough are shaped, they are placed in compartments of a dough form which correspond to the shape of the desired loaves or other baked products. The lumps of dough remain in these compartments during fermentation and subsequent baking. An example of this type of form is described in U.S. Patent No. 5,232,609.

Dough forms are usually constructed to permit air circulation to the dough in order to properly bake the product. For this reason they are generally made from open-work material, such as fine mesh metal grids, or thin perforated metal sheets. They may also be open-work glass fabric including at least 50% of void space, and fixed to a rigid metal supporting frame, which may be the side walls of a tray. The surfaces of the form in contact with the dough may be specially treated to be non-sticking, such as by being provided with a coating of silicone elastomer, silicone resin, or polytetrafluorethylene-based material.

One disadvantage of present dough forms as described above is related to the reinforcing fabric material that is used for their construction. Because the fabric material needs to withstand both the process of being coated with non-stick polymer and the conditions in the oven environment during use, it is generally made of metal wire, or of fibers of carbon, ceramic, or glass. If the reinforcing material is metal, the forms are subject to being permanently deformed as a result of the wear and tear of normal use. Moreover, metal reinforcing material is relatively costly and is difficult to form into desired shapes without creating troublesome variations in the size of the mesh openings in some portions. If carbon, ceramic, or glass fiber is used as the reinforcing material, the cost is also relatively high. Furthermore, sharp bending of the material can result in local breakage of the fibers and consequent premature failure of the coating at the point of the breakage.

From FR 2 774 554 A a flexible, self-supporting impression mold or plate is known, which comprises an internal surface suitable to be in contact with food, for molding or baking pastry. The impression mould comprises a fabric forming a support impregnated with at least a cured polysiloxane type resin, said fabric being thermoformed and provided with at least an appropriate anti-adhesive coating layer, in particular based on silicone rubber or elastomer suitable for being in contact with food,.

EP 0 543 401 A describes a silicone rubber composition which may be used to coat fabrics comprising
(A) 100 parts by weight of a polyorganosiloxane having, per molecule, at least two structural units represented by the following formula (I):

   (R¹)a(R²)_{b}SiO_{(4-(a+b))/2} (I),

   wherein R¹ represents an alkenyl group; R² represents a substituted or unsubstituted monovalent hydrocarbon group containing no aliphatic unsaturated bonds; a represents 1 or 2; b represents 0, 1, or 2; and a+b represents 1, 2, or 3,
(B) a polyorganohydrogensiloxane comprising structural units shown by the following formula (II):

   (R³)cH_{d}SiO(_{4-(c+d))/2} (II)

   wherein R³ represents a substituted or unsubstituted monovalent hydrocarbon group; c represents 0, 1 or 2; d represents 1 or 2; and c+d represents 1, 2, or 3,
   and having at least three silicon-bonded hydrogen atoms per molecule, the amount of component (B) being such that the number of silicon-bonded hydrogen atoms in component (B) is from 0.5 to 4.0 per R¹ group in the structural units shown by formula (I) of component (A),
(C) from 0.1 to 10 parts by weight of a compound selected from the group consisting of an organosilicon compound having, per molecule, at least one silicon-bonded hydrogen atom and at least one group represented by the formula (III): 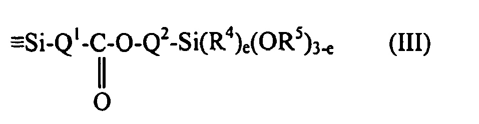 wherein Q¹ and Q² each represent a divalent hydrocarbon group; R⁴ and R³ each represent a monovalent hydrocarbon group having from 1 to 4 carbon atoms; and e represents 0 or 1 and an acrylic- or methacrylic-functional silane coupling agent;
(D) from 0.1 to 10 parts by weight of an epoxyalkylalkoxysilane represented by the following formula (IV):

   X-Q³-Si(R⁶)_{f}(OR⁷)_{3-f} (IV)

   wherein Q³ represents a divalent hydrocarbon group having from 1 to 4 carbon atoms; R⁶ and R⁷ each represent a monovalent hydrocarbon group having from 1 to 4 carbon atoms; X represents glycidoxy group or epoxycyclohexyl group, and f represents 0 or 1,
(E) from 0 to 5 parts by weight of an aluminum chelate compound, and
(F) platinum and/or platinum compound in an amount of from 1 to 100 ppm of the polyorganosiloxane, component (A), in terms of the amount of platinum atoms.

### SUMMARY OF THE INVENTION

This invention relates to a composite structure comprising a fabric of thermoplastic organic polymer impregnated with a cured, heat resistant polymer, wherein the composite structure has sufficient stiffness to be self supporting and is dimensionally stable up to a temperature of at least about 195°C. In a preferred embodiment, the thermoplastic organic polymer is polyester and the cured, heat resistant polymer is silicone rubber. Another aspect of the invention relates to dough form structures wherein the composite structure defines a substantially flat tray comprising at least one depression defining a compartment operative to retain and form a piece of dough during a dough baking process.

Yet another aspect of the invention relates to a process for making a composite article with a predetermined shape comprising the steps of: a) providing a flat sheet of a fabric comprising a thermoplastic organic polymer_{;} b) impregnating the fabric with a liquid precursor to a heat resistant polymer; c) inserting the flat sheet into a heated mold to form the sheet into the predetermined shape; d) heat curing the liquid precursor to form cured, heat resistant polymer, thereby fixing the composite article in the predetermined shape; and e) removing the shaped composite article from the mold.

The invention also relates to a method of fermenting and baking dough using the dough forms of the invention.

### BRIEF DESCRIPTION OF THE DRAWINGS

Figure 1 is a schematic, elevated perspective view of a multiple compartment dough form in accordance with a preferred embodiment of the invention.
Figure 2 is an exaggerated schematic view of a fragment of the dough form identified as element 9 of Figure 1 made of a composite of knitted reinforcing fabric impregnated with cured, heat resistant polymer.
Figure 3 is a schematic, elevated perspective view of a bread form in accordance with a further alternate embodiment of the invention.
Figure 4 is an exposed section view of the fragment of the composite of the form of Figure 2 viewed along section line 4-4 showing the fabric fibers and the coating of cured, heat resistant polymer.
Figure 5 is a schematic diagram showing the coating and curing process for making a composite article in accordance with the present invention.

### DETAILED DESCRIPTION OF THE INVENTION

The invention is a composite structure comprising a polymer filament reinforcing fabric impregnated with cured, heat resistant polymer and the use of the composites for manufacture of novel dough form structures. The polymer fabric is chosen to tolerate the baking temperature to which the form will be subjected. The resulting dough form is not only relatively low in cost as compared to forms made with metal, carbon, ceramic, or glass fibers, but is also resistant to permanent deformation and readily formed into desired geometries, especially if the reinforcing fabric is a knitted fabric. Moreover, the novel dough forms of the invention are suitable for use in microwave ovens, since they need not include any metal or other electrically conductive material. The composite structure of the invention comprises a fabric of a thermoplastic organic polymer that is impregnated or coated with a cured heat resistant polymer.

The thermoplastic polyester polymers for use in the invention will have a softening point higher than the contemplated baking temperature when the composites are to be used for dough forms. Polyester fibers are preferred. Polyester fibers have the advantage of good heat transfer and the ability to tolerate ordinary baking temperatures on the order of about 175°C without dimensional changes. They have the further advantage of providing a very good adherence to silicone rubber, the cured, heat resistant polymer used in the invention. What is meant buy the term "polyester" is any fiber forming ester of a dihydric alcohol and terephthalic acid.

The fabric for use in constructing the composite can be a woven, nonwoven or knitted fabric. Knitted fabrics are preferred. The use of a knit reinforcing fabric is particularly advantageous in that unlike a woven fabric, which does not permit stretching along the directions of the fibers, a knit fabric permits stretching in all directions in its plane. This permits the fabric to be readily deformed to create depressions to serve as compartments without having to provide compensating deformations elsewhere to account for changes in the length of fibers present in such depressions as compared to fibers parallel thereto in the un-deformed portions of the fabric. Woven fabrics in particular impose more constraints in the pressing of compartments, because they will not yield in their own plane in the directions in which the threads run. Therefore, if a compartment is molded into the fabric, the threads adjacent to the compartment must pass through some compensating deformations which will require the same length of thread as those in the depression. Raised bosses can be provided adjacent compartments for this purpose. In some situations it is also possible to provide more yield for the fabric by orienting the weft diagonally to the longitudinal axis of the compartments. This has the drawback of using much more fabric and creating appreciable waste.

A preferred knitted polyester fabric for use in composites for dough forms weighs about 27 g per square metre (9 ounces per square yard) and has large enough openings to result in perforations in the coated material to permit the flow of air through it. The need for such perforations and the degree to which they constitute voids in the composite of the forms varies as a function of the nature of the dough for which a form is intended to be used. For bread the dough form composite preferably includes at least about 25% void space, more preferably at least about 50% and most preferably at least about 75% void space. The amount of void in the composite is generally less than 50% for deep frozen doughs and yellow doughs which present problems of consistency which promote mechanical anchorage in the mesh or holes of the fabric. In some cases, doughs or batter such as cake dough may be processed favorably with very fine mesh fabric that has as little as no void space at all. This can be readily provided by the use of a fabric which is occluded by complete impregnation or complete coating with the cured, heat resistant polymer. However, the articles according to the present invention have at least 25% void space.

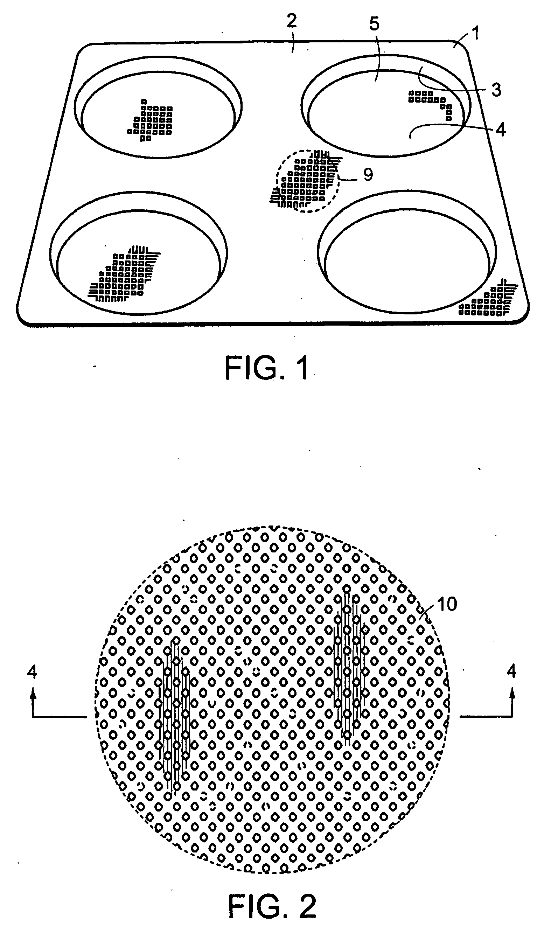

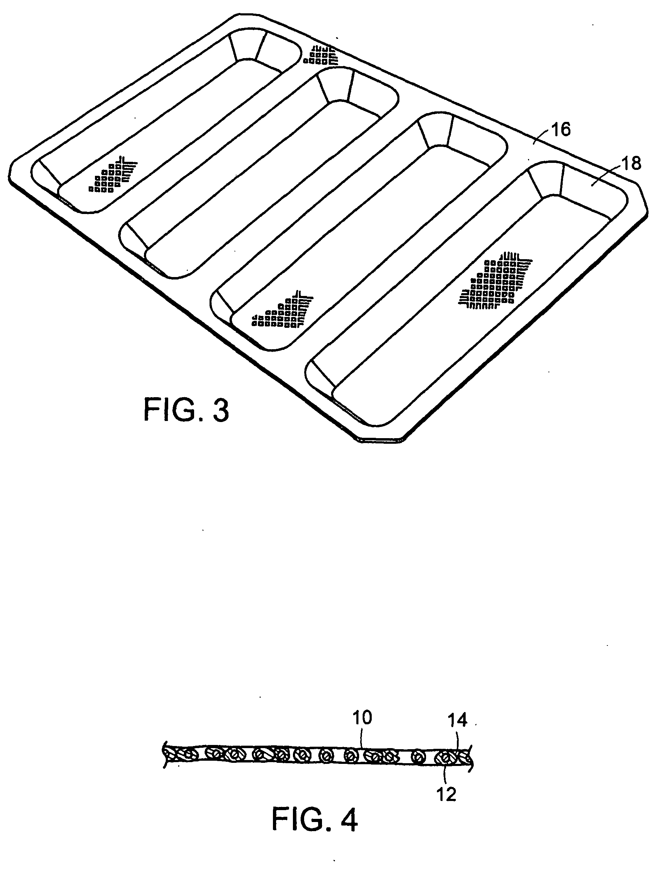

Preferred composites for dough forms **1** and **16** of Figures **1** and **3** respectively are made, for example, with tricot or Raschel knit fabric made from two-ply 150 denier textured polyester yarn. The Raschel knit construction is made by combining two separate yam systems through an interlocking series of loops which run continuously in the lengthwise direction. The pattern of interlocking loops and the yam used to make the fabric create the mesh appearance and the fabric's physical characteristics. The yam used is 100%, 2 ply 150 denier textured polyester.

The reinforcing polymer fabric of the above-described embodiments is a knitted fabric of polyester. The reinforcing fabric can also be a non-woven cloth or an array of rods or straps arranged to provide the mechanical properties sought. The use of relatively heavy reinforcement would be likely to require the above-described step of molding the material at a temperature high enough to soften and "set" the polymer in the desired shape. Setting the reinforcement is described more fully, below. This would further add to the structural integrity of the resulting article and permit the option of using heavy polymer filaments, rods, or straps or the like as the reinforcement in place of knit or woven fabric. Such heavy reinforcement elements would otherwise not permit themselves to be held in a desired shape by merely the presence of the cured, heat resistant polymer coating.

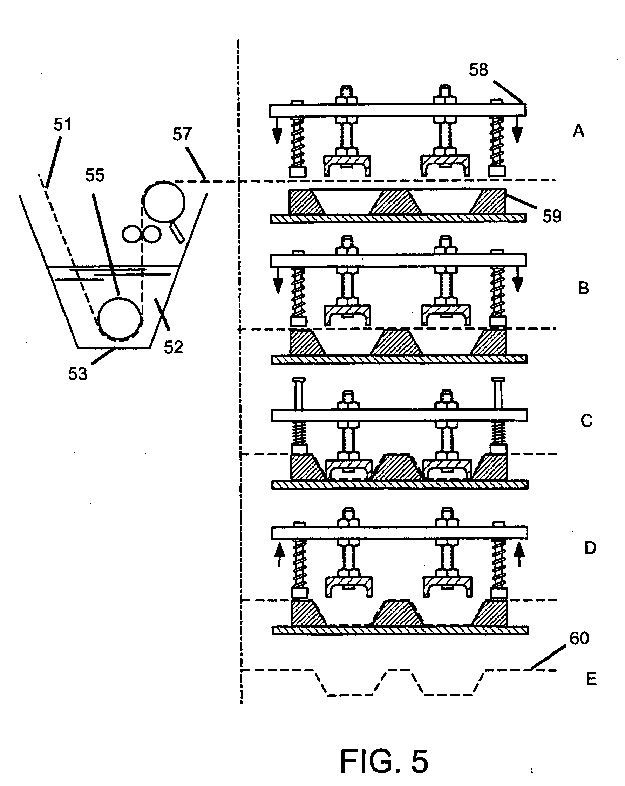

A product according to this invention can be obtained by impregnating a flat sheet of the polyester polymer fabric with liquid, uncured silicon rubber polymer precursor, molding the sheet to the shape of the desired product and curing the polymer and optionally setting the organic polymer fabric to a solid, self-supporting article substantially as is shown schematically in Fig. **5**. To the left of the vertical line separating two sections of the process is seen the fabric impregnating section. To the right is shown the molding and curing section viewed at five different stages A-E of completion of the product.

Fabric **51** is supplied, preferably from a continuous roll, not shown, and is immersed in a bath **52** of the liquid uncured polymer precursor which is to impregnate the fabric. The liquid uncured polymer preferably has a viscosity, of from about 10,000 to about 100,000 centipoise and more preferably from about 45,000 to about 75,000 centipoise. According to the invention, the cured, heat resistant coating is silicone rubber and the coating is obtained by impregnation and/or coating of a flat sheet of the polyester polymer fabric with uncured silicone rubber

In a preferred technique, the fabric is drawn below a roll **55** which is itself positioned below the surface of the liquid in a trough **53**. The soaking wet fabric emerges vertically from the bath and passes through a metering station, such as a pair of opposed rotating or stationary rods set laterally apart to provide a desired thickness of liquid on the fabric. The liquid-impregnated fabric **57** can be redirected as may be convenient to enter the molding and curing section, for example by using a guide roll equipped with a scraper bar to clean excess liquid from the guide roll. A method suitable for impregnating an organic polymer fabric with liquid curable polymer precursor is disclosed in greater detail in US 5,075,065.

The liquid impregnated fabric **57** is drawn by conventional conveying means (not shown) into the cavity of an appropriately shaped mold as seen in stage A of Fig. 5. With a length of the fabric fully disposed within the mold, the fabric can be cut in the cross machine direction so that the new leading edge of the cut fabric **57** is moved into a different mold while the molding operation is continued. Thus a discontinuous molding operation can be adapted to operate with a continuous impregnating operation.

The mold is represented by opposing units **58** and **59**. Initially apart (stage **B**), the opposing mold units are drawn toward each other in the direction of the arrows. This occurs at temperatures below the curing and setting temperatures of the curable polymer and the organic polymer, respectively. Consequently, the impregnated fabric is still flexible, pliant and able to conform closely to the shape defined by the converging molding units **58** and **59** as seen in stage C. After the shape defined at stage C is developed, the curable liquid polymer precursor is cured, preferably by increasing temperature in the mold. This causes the precursor material to polymerize and solidify to a substantially rigid structure. By "rigid" is meant that the structure is self-supporting and can retain its shape after releasing the mold units, although the structure may exhibit a slight degree of flexibility. Indeed, it is desirable that the final product have a small amount of flexibility so that dough forms can absorb repeated impacts that typically occur during normal use without permanently deforming, cracking or breaking.

At stage D the mold units **58** and **59** are separated as signified by motion in the direction of the arrows. The liberated product **60** can then be removed from the mold as seen in stage E. Several variations of the process at stages D and E are contemplated. For example, the product can be cooled to complete the cure at stage D before removal from the mold. In another embodiment the article can be removed from the mold at an elevated temperature while the curable polymer continues to cure and/or while the organic polymer of the reinforcing fabric continues to set. This technique is made possible by the ability of the cured polymer and setting fabric to support each other while the slower of the two to harden achieves it rigid condition. That is, a high-temperature, quick setting fabric can retain the product article's shape while the partially hardened curable polymer continues to solidify. An advantage of this technique is that it allows the mold to be vacated by the as yet not-fully hardened product article so that a new sheet of liquid impregnated fabric can be inserted into the mold. Accordingly, the productivity of the overall process as measured in number of product articles per mold per unit of time can be maximized. The extent to which a partially hardened product article can be removed from the mold before the fully cured condition is attained will depend upon various factors such as the curing dynamics of the curable polymer, the softening temperature of the fabric polymer relative to the curing temperature of the curable polymer, the geometry of the product article and the like. One of ordinary skill in the art should be able to optimize the productivity of a given system without undue experimentation based upon the present disclosure.

In a preferred impregnation process such as described above, the polymer fabric material is impregnated with a controlled amount of a platinum-catalyzed, addition cure, solventless, liquid silicone rubber formulation. The liquid silicone rubber formulation used in this embodiment is typically composed of a commercially available two-component system, for example, A and B components which are mixed in a specified ratio, typically from 1:1 to 10:1. Each component typically contains vinyl-terminated polydimethylsiloxane polymers and may contain fumed silica as a reinforcing filler, and/or extending filler. Typically, one component, for example the A component, contains a catalyst, and the other component, for example the B component, contains a crosslinking agent and an inhibitor that is removed by heating to allow the liquid silicone rubber formulation to cure into a solid rubber. The liquid silicone rubber formulation may also incorporate pigments and/or other additives.

A preferred embodiment of the present invention is the novel composite dough form **1** illustrated in Figure **1**. In the preparation of bakery or pastry products, dough is placed within a recessed compartment **5** of form **1**. The dough form **1** normally resides on a tray or conveyor, not shown.

The dough form **1** of Figure **1** features a flat sheet **2** of the composite material of the invention, which includes an array of four compartments **5** suitable for receiving a bread, cake, or pastry product or the like. Each compartment **5** has a tapering side wall **3** and a flat bottom **4**. The preferred shape for the recessed cavity is dependent on the item to be fermented/baked. There is no preferred number of compartments that reside in a composite sheet. For illustrative purposes, the composite sheet **1** of Figure **1** shows four compartments. It is to be noted that the material of the sheet **2** between and around the compartments **5** is flat and does not include features provided to compensate for changes in fabric fiber length introduced by the presence of the compartments. This is because the fabric is a knit fabric, rather than a woven fabric.

A sectioned fragment **10** of the composite material of the dough form **1** is shown in Figures **2** and **4**. A knit fabric of polyester filaments **12** is provided with silicone rubber coating **14** to hold the shape of the compartments and to prevent dough from sticking to the surface.

Another embodiment of the invention is the dough form **16** of Figure **3****.** The dough form **16** is made of the same composite material as that of Figure **1****,** but has compartments **18** which are elongated for making small breads.

For manufacture of the dough forms, sheet consisting of fabric, preferably knitted polyester, coated or impregnated with the liquid uncured silicone rubber, is pressed in a heated mold until the liquid polymer has cured. The mold has a geometry which draws the sheet into the desired compartment shapes. The temperature of the mold in which the sheet is cured may be anywhere between about 120°C and about 235°C for simply curing the silicone rubber, and the curing will take place in just a few minutes. Polyester material softens at a temperature of from about 225°C to about 235°C. Therefore, when the higher temperatures near 235°C are employed during molding, the polyester reinforcement fabric will be softened simultaneously with the curing of the silicone rubber and thereby retain a "set" when it is removed from the mold and is cooled below the softening point.

Additional heat resistant polymer, e.g. silicone rubber, may be provided around the perimeter of the flat portion of the sheet **2** or to other locations to provide added stiffening where desired. Additionally, extruded polyester film may be laminated around the perimeter of the form to provide additional strength, durability, or stiffness. Stiffening may also be provided by including rib profiles in the compartment geometry or in other portions of the dough form. Stiffening ribs in the flat portion of the sheet between and around the compartments need not have a geometry constrained by fiber lengths if the fabric is a knit fabric.

The composite sheet may be pressed to create longitudinally and transversely successions of compartments, of any desired shape with a clearance allowing the baked pieces to be removed and separated. It may be pressed to create oval cradles of oblong shape with a clearance for removing the pieces, these cradles succeeding each other adjacently by the large side, being able to receive shuttle-shaped pieces such as milk rolls or butter croissants. It may be pressed to create successive lines of round and hollow dishes, with flat bottoms, of variable diameter, depth and clearance, depending on the nature of the pieces to be baked, such as small round buns, rolls for hamburgers, muffins, or fruit loaves. It may be pressed to create a succession of hollow half cylinders, of varying thickness and length for receiving pieces such as hot dog rolls, fancy "ficelles" (long very thin loaves). Preferably the geometry of the dough forms is designed to allow empty forms to nest, that is, to stack one atop another such that the volume of space occupied by a stack of multiple forms in storage is less than the sum of the volumes of the individual forms in the stack.

While the utility of the composites of the invention has been described above with respect to dough forms, uses for the composites are more general. Various other useful articles can be molded and/or cut from the novel composite materials of the invention to gain advantage of their ruggedness, capability of being provided with perforations, flexibility, electrically insulating properties, ability to tolerate baking temperatures, and non-stick surface. For example the composites may be used to make a perforated or unperforated soap dish, which would be unbreakable, have no sharp corners, and be easy to clean. They could be used to make colanders of various shapes which could be collapsed into themselves by turning one side inside out into the other. They could also be used to make flat or dome-shaped splatter shields for use in a microwave or other oven. Such shields would be particularly rugged and easy to clean and could be folded for more convenient storage.

Finally, although the invention has been described with regard to particular means, materials and embodiments, it should be noted that the invention is not limited to the particulars disclosed and extends to all equivalents within the scope of the claims.

## Claims

1. An article comprising a composite structure comprising a fabric of a thermoplastic organic polymer comprising polyester impregnated with a cured, heat resistant polymer comprising silicone rubber, wherein the composite structure has sufficient stiffness to be self-supporting and is dimensionally stable up to a temperature of at least 195°C, and wherein the composite structure defines a substantially flat tray comprising at least one depression defining a compartment operative to retain and form a piece of dough during a dough baking process, wherein the composite structure has an open work structure defining at least 25 % void space.

2. The article of claim 1, wherein the fabric is selected from the group consisting of knitted fabrics, woven fabrics, and nonwoven fabrics.

3. The article of claim 2, wherein the fabric is a knitted fabric.

4. The article of claim 1, wherein the flat tray is free of deformations other than the depressions.

5. The article of claim 1, wherein the flat tray defines a flat perimeter area around the depressions and which comprises adjacent to the perimeter an amount of heat resistant polymer effective to render the article sufficiently self supporting to retain and form the dough during a dough baking process free of any supportive devices extrinsic to the flat tray other than a base surface on which the article is positioned during the dough baking process.

6. A process for fermenting and baking dough comprising placing a lump of dough in a depression of the article of claim 1, allowing the dough to ferment, and then heating the fermented dough contained within the article to a temperature effective to bake it.

7. A process for making a composite article with a predetermined shape with at least one depression defining a compartment, being self-supporting and dimensionally stable up to a temperature of at least 195°C, comprising the steps of:
a) providing a flat sheet of a fabric comprising a thermoplastic organic polymer comprising polyester;
b) impregnating the fabric with a liquid precursor to a heat resistant polymer comprising curable liquid silicone rubber;
c) inserting the flat sheet into a heated mold to form the sheet into the predetermined shape;
d) heat curing the liquid precursor to form cured, heat resistant polymer, thereby fixing the composite article in the predetermined shape; and
e) removing the shaped composite article from the mold.

8. The process of claim 7, wherein the curing step comprises heating the fabric impregnated with liquid precursor to a curing temperature that is at or above the softening point of the thermoplastic polymer.

9. The process of claim 7, in which the composite article has an open work structure and further comprising applying additional liquid precursor to selected portions of the sheet and curing the additional liquid precursor to heat resistant polymer to increase the stiffness of the composite article while maintaining at least 25 % void space in the open work structure.

## Patentansprüche

1. Gegenstand, umfassend eine Kompositstruktur, umfassend ein Gewebe aus einem thermoplastischen organischen Polymer, umfassend Polyester, das mit einem gehärteten, wärmebeständigen Polymer, umfassend Silicongummi, imprägniert ist, wobei die Kompositstruktur eine ausreichende Steifigkeit aufweist, um selbsttragend zu sein, und bis zu einer Temperatur von wenigstens 195 °C formstabil ist, und wobei die Kompositstruktur einen im Wesentlichen flachen Einsatz ("tray") definiert, umfassend wenigstens eine Vertiefung, die ein Fach definiert, das zum Halten und Formen eines Teigstücks während eines Teigbackvorgangs funktionsfähig ist, wobei die Kompositstruktur eine durchbrochene Struktur aufweist, die wenigstens 25 % freien Raum definiert.

2. Gegenstand gemäß Anspruch 1, wobei das Gewebe ausgewählt ist aus der Gruppe, bestehend aus Maschenware, Webware und Vlies.

3. Gegenstand gemäß Anspruch 2, wobei das Gewebe eine Maschenware ist.

4. Gegenstand gemäß Anspruch 1, wobei der flache Einsatz frei von anderen Verformungen als den Vertiefungen ist.

5. Gegenstand gemäß Anspruch 1, wobei der flache Einsatz eine flache Umfangsfläche um die Vertiefungen definiert und wobei er dem Umfang benachbart eine Menge an wärmebeständigem Polymer umfasst, die wirksam ist, den Gegenstand ausreichend selbsttragend zu machen, um den Teig während eines Teigbackvorgangs frei von bezüglich des flachen Einsatzes extrinsischen Stützeinheiten, die von einer Grundoberfläche verschieden sind, auf welcher der Gegenstand während des Teigbackvorgangs angeordnet ist, zu halten und zu formen.

6. Verfahren zum Fermentieren und Backen von Teig, umfassend das Anordnen eines Teigstücks in einer Vertiefung des Gegenstands gemäß Anspruch 1, Fermentierenlassen des Teigs und anschließend Erwärmen des fermentierten Teigs, der in dem Gegenstand enthalten ist, auf eine Temperatur, die wirksam ist, ihn zu backen.

7. Verfahren zum Herstellen eines Kompositgegenstands mit einer vorbestimmten Form mit wenigstens einer Vertiefung, die ein Fach definiert, der selbsttragend und bis zu einer Temperatur von wenigstens 195 °C formstabil ist, umfassend die Schritte:
a) Bereitstellen einer flachen Lage ("sheet") eines Gewebes, umfassend ein thermoplastisches organisches Polymer, umfassend Polyester;
b) Imprägnieren des Gewebes mit einem flüssigen Vorläufer eines wärmebeständigen Polymers, umfassend härtbaren, flüssigen Silicongummi;
c) Einführen der flachen Lage in ein gewärmtes Formwerkzeug, um die Lage zu der vorbestimmten Form zu formen;
d) Wärmehärten des flüssigen Vorläufers, um gehärtetes, wärmebeständiges Polymer zu bilden und so den Kompositgegenstand in der vorbestimmten Form zu fixieren; und
e) Entfernen des geformten Kompositgegenstands aus dem Formwerkzeug.

8. Verfahren gemäß Anspruch 7, wobei der Härtungsschritt Erwärmen des mit flüssigem Vorläufer imprägnierten Gewebes auf eine Härtungstemperatur umfasst, die bei oder über dem Erweichungspunkt des thermoplastischen Polymers liegt.

9. Verfahren gemäß Anspruch 7, wobei der Kompositgegenstand eine durchbrochene Struktur aufweist, ferner umfassend das Auftragen von zusätzlichem flüssigem Vorläufer auf ausgewählte Abschnitte der Lage und Härten des zusätzlichen flüssigen Vorläufers zu wärmebeständigem Polymer, um die Steifigkeit des Kompositgegenstands zu erhöhen und dabei wenigstens 25 % freien Raum in der durchbrochenen Struktur zu erhalten.

## Revendications

1. Article comprenant une structure composite comprenant un tissu constitué d'un polymère organique thermoplastique comprenant un polyester imprégné par un polymère thermorésistant durci comprenant du caoutchouc de silicone, où la structure composite possède une rigidité suffisante pour être autoporteuse et est stable sur le plan dimensionnel jusqu'à une température d'au moins 195°C, et où la structure composite définit un plateau sensiblement plat comprenant au moins un creux définissant un compartiment opérationnel pour retenir et former un morceau de pâte pendant un procédé de cuisson de pâte, où la structure composite possède une structure ajourée définissant au moins 25% d'espace vide.

2. Article selon la revendication 1, dans lequel le tissu est choisi dans le groupe constitué par les tissus tricotés, les tissus tissés et les tissus non tissés.

3. Article selon la revendication 2, dans lequel le tissu est un tissu tricoté.

4. Article selon la revendication 1, dans lequel le plateau plat est dépourvu de déformations autres que les creux.

5. Article selon la revendication 1, dans lequel le plateau plat définit une zone de périmètre plat autour des creux et qui comprend, en position adjacente par rapport au périmètre, une quantité de polymère thermorésistant efficace pour rendre l'article suffisamment autoporteur pour retenir et former la pâte pendant un procédé de cuisson de pâte dépourvu de dispositifs supports quelconques extrinsèques au plateau plat autres qu'une surface de base sur laquelle l'article est placé pendant le procédé de cuisson de pâte.

6. Procédé de fermentation et de cuisson de pâte, comprenant les étapes consistant à disposer un morceau de pâte dans un creux de l'article selon la revendication 1, laisser fermenter la pâte, puis chauffer la pâte fermentée contenue au sein de l'article à une température efficace pour la cuire.

7. Procédé de fabrication d'un article composite ayant une forme prédéterminée ayant au moins un creux définissant un compartiment, étant autoporteur et stable sur le plan dimensionnel jusqu'à une température d'au moins 195°C, comprenant les étapes consistant à :
(a) fournir une feuille plate d'un tissu comprenant un polymère organique thermoplastique comprenant un polyester ;
(b) imprégner le tissu par un précurseur liquide d'un polymère thermorésistant comprenant du caoutchouc de silicone liquide durcissable ;
(c) insérer le feuille plate dans un moule chauffé afin de mettre en forme la feuille selon la forme prédéterminée ;
(d) durcir thermiquement le précurseur liquide afin de former un polymère thermorésistant durci, fixant ainsi l'article composite selon la forme prédéterminée ; et
(e) retirer l'article composite formé dudit moule.

8. Procédé selon la revendication 7, dans lequel l'étape de durcissement comprend le chauffage du tissu imprégné par du précurseur liquide jusqu'à une température de durcissement qui est égale ou supérieure au point de ramollissement du polymère thermoplastique.

9. Procédé selon la revendication 7, dans lequel l'article composite possède une structure ouverte et comprenant en outre l'application de précurseur liquide supplémentaire à des portions sélectionnées de la feuille et le durcissement du précurseur liquide supplémentaire en polymère thermorésistant afin d'augmenter la rigidité de l'article composite tout en maintenant au moins 25% d'espace vide dans la structure ouverte.
